Europäisches Patentamt

European Patent Office

Office européen des brevets

(11) Publication number: **0 267 543**

**A1**

(12) **EUROPEAN PATENT APPLICATION**

(21) Application number: **87116322.6**

(22) Date of filing: **05.11.87**

(51) Int. Cl.⁴ **B60G 13/06 , F16F 9/00**

(30) Priority: **10.11.86 IT 5406386 U**

(43) Date of publication of application:
**18.05.88 Bulletin 88/20**

(84) Designated Contracting States:
**DE ES FR GB SE**

(71) Applicant: **FIAT AUTO S.p.A.**
**Corso Giovanni Agnelli 200**
**I-10135 Torino(IT)**

(72) Inventor: **Egidi, Corrado**
**Corso Montecucco, 84**
**I-10100 Torino(IT)**

(74) Representative: **Jorio, Paolo et al**
**c/o Ingg. Carlo e Mario Torta Via Viotti 9**
**I-10121 Torino(IT)**

(54) **Damper device for a motor vehicle suspension.**

㉗ The device (1) comprises two hydraulic shock absorbers (15, 23) mechanically connected in series, and undergoing complementary fractions of the required total travel stroke.

Fig. 1

EP 0 267 543 A1

## DAMPER DEVICE FOR A MOTOR VEHICLE SUSPENSION

This invention relates to a damper device, particularly for an elastic suspension between the wheels and frame of a motor vehicle.

When suspending a motor vehicle wheel from the vehicle frame it is known to normally use systems comprising an elastic element interposed between the suspended masses connected to the wheel and the frame so as to deform elastically under the action of the loads applied to the wheel, and a damper device which attenuates the amplitude of the elastic oscillations resulting from this deformation.

Damper devices of known type generally a hydraulic shock absorber consisting of a cylinder containing the dydraulic fluid, generally oil, hinged at one end to the suspended masses, and a piston axially slidable within the cylinder and having its rod hinged at the opposite end to the frame. As the oil is substantially incompressible, the piston is able to slide within the cylinder by virtue of a plurality of axial bores in the cylinder, which enable the oil to flow from one cylinder chamber to the other. The damping action results from the viscous interactions between the oil and the piston.

The overall length of the described shock absorbers is relatively large because the actual cylinder length must be at least equal to the piston stroke. In practice, this length is always greater because of the thicknesses of the piston and cylinder walls, and because of the compensation volumes provided within the cylinder. consequently, damper devices of known type are unsuitable for applications in which the longitudinal space available is less than the required stroke.

The object of the present invention is to provide a damper device, particularly for a motor vehicle suspension, which obviates the aforesaid drawback of damper devices of known type, by being of overall length less than the required stroke. Said object object is attained according to the present invention by a damper device, particularly for a motor vehicle suspension, of the type comprising connection means connectable respectively to a frame and to a suspended mass of said motor vehicle, and damping means which connect said connection means together so that they are able to slide substantially along a longitudinal axis, characterised in that said damping means comprises at least one pair of hydraulic shock absorbers connected mechanically in series.

The present invention will be more apparent from the description of two preferred embodiments given hereinafter with reference to the accompanying drawings, in which:

Figure 1 is a diagrammatic longitudinal section through a first embodiment of a damper device according to the present invention; and

Figure 2 is a diagrammatic elevation of a second embodiment of a damper device according to the present invention.

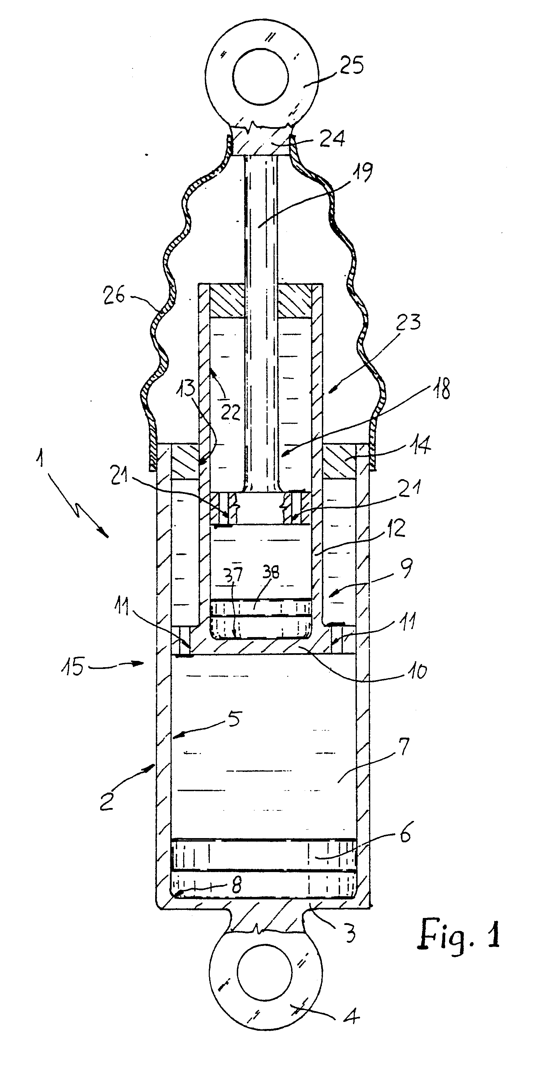

In Figure 1, the reference numeral 1 indicates overall a damper device for a motor vehicle suspension.

The device 1 comprises a cylindrical casing 2, from the base wall 3 of which there extends a socket 4 of horizontal axis for its connection to a suspended mass of a motor vehicle when in use. The casing 2 defines an internal cylindrical cavity 5 in which a disc 6 can slide longitudinally in a fluid-tight manner and divides said cavity 5 into an upper chamber 7 containing a viscous fluid, such as oil, and a lower chamber 8 of smaller dimensions containing a pressurised gas to form a compensation volume in known manner.

Along the upper chamber 7 there can slide a piston 9 consisting of a disc 10 of cross-section substantially equal to the cross-section of the cavity 5 and provided with two peripheral unidirectional directions respectively, and a hollow cylindrical rod 12 slidable in a fluid-tight manner within a hole 13 through the upper wall 14 of the cylindrical casing 2. The cylindrical casing 2 and piston 9 together form a first hydraulic shock absorber 15.

A second piston 18, comprising a cylindrical rod 19 and a disc 20 provided with analogous peripheral valves 21, can slide within a cylindrical cavity 22 of the rod 12, this cavity also containing a viscous fluid and being provided with a compensation volume 37 separated from said fluid by a disc 38 which slides in a fluid-tight manner. The hollow rod 12 and piston 18 together form a second hydraulic shock absorber 23. The valves 11 and 21 preferably have different settings to enable them to open under different pressure conditions.

The rod 19 terminates upperly in a cylindrical enlargement 24, from which a cylindrical socket 25 of horizontal axis extends for connection to the vehicle frame when in use.

A protection bellows 26, conveniently of elastomeric material, is mounted with its opposite ends over the top part of the cylindrical casing 2 and over the cylindrical enlargement 24 of the rod 19, in order substantially to prevent soiling of the rods 12 and 19, with consequent damage to the seals.

The operation of the damper device 1 is as follows. The elastic oscillations of the vehicle suspended masses result in variations in the distance between the sockets 4 and 25, which are secured respectively to said suspended masses and to the frame and are rigid with the cylindrical casing of the first shock absorber 15 and with rod of the second shock absorber 23 respectively, with the result that the pistons 9, 18 and the respective cylindrical casings 2, 12 slide relative to reach other. the shock absorbers 15, 23 are mechanically connected in series as the rod 12 of the former forms the cylindrical casing of the latter. Consequently, the travel resulting from said oscillations is divided between the two shock absorbers 15, 23, and both transmit the same damping load. The different settings of the valves 11 and 21 result in a different rigidity of the respective shock absorbers, which enables the same effect to be obtained as would be obtained in known manner by a single shock absorber of variable rigidity.

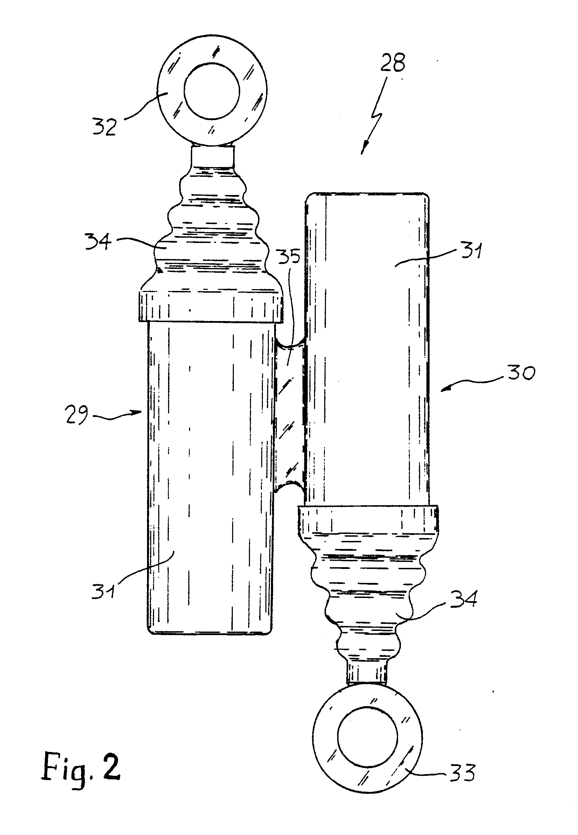

In Figure 2, the reference numeral 28 indicates overall a second embodiment of a damper device according to the present invention. The device 28 comprises a pair of hydraulic shock absorbers 29, 30 disposed side by side in mutually inverted relationship with their axes parallel.

Each shock absorber 29, 30 comprises an outer cylindrical casing 31, in the interior of which a respective piston, not shown but entirely analogous to the piston 18 described with reference to the device 1, can slide immersed in a viscous fluid. The rods of the pistons of the shock absorbers 29, 30 comprise at their ends respective sockets 32, 33 for connection to the frame and to a suspended mass of the vehicle respectively. Again in this case, the rods are protected by respective bellows 34.

According to the present invention, the outer cylindrical casings 31 are rigidly joined to each other, for example by means of an intermediate plate 35 welded to both the outer cylindrical casings 31.

The operation of the device 28 is entirely analogous to that of the device 1. In this case, the series connection between the two shock absorbers 29 and 30 derives from the rigid joint between their respective cylindrical casings 31.

The advantages of the damper devices 1 and 28 constructed in accordance with the present invention are apparent from an examination of their characteristics.

The maximum total stroke of the device 1 is in fact equal to the sum of the maximum paths of travel of the shock absorbers 15 and 23, whereas its overall length with complete retraction is little more than the total length of a single shock absorber 15 or 23, and in any event less than the said maximum stroke.

The device 28 has analofgous advantages, and moreover as the two shock absorbers 29, 30 are identical, it enables common internal components to be used resulting in obvious cost reduction by economy of scale.

Finally, modifications can be made to the devices 1 and 29 but without leaving the protective scope of the present invention. In particular, the device 1 can comprise several coaxial shock absorbers of the described type disposed in series. The device 28 can comprise two shock absorbers 29, 30 which are not identical. Finally, the device 28 can be formed by connecting together two devices 1, each of which can comprise more than one shock absorber.

## Claims

1. A damper device, particularly for a motor vehicle suspension, of the type comprising connection means connectable respectively to a frame and to a suspended mass of said motor vehicle, and damping means which connect said connection means together so that they are able to slide substantially along a longitudinal axis, characterised in that said damping means comprise at least one pair of hydraulic shock absorbers (15, 23; 29, 30) connected mechanically in series.

2. A device as claimed in claim 1, characterised in that said shock absorbers (15, 23) are coaxial.

3. A device as claimed in claim 1 or 2, characterised in that a first (15) of said shock absorbers (15, 23) comprises a cylindrical outer casing (2) connectable to said suspended mass, and a piston (9) slidable within said outer casing (2) and provided with a hollow rod (12); the second (23) of said shock absorbers (15, 23) comprising an outer casing formed from said hollow rod (12) of said first shock absorber (15), and a piston (18) slidable within said hollow rod (12) and provided with a respective rod (19) connectable to the motor vehicle frame.

4. A device as claimed in claim 1, characterised in that said shock absorbers (29, 30) have parallel axes and are disposed in mutually inverted relationship; said shock absorbers (29, 30) comprising respective mutually rigid outer casings (31) and respective rods to be secured respectively to said frame and to said suspended mass.

5. A device as claimed in claim 4, characterised in that said outer casings (31) of said shock absorbers (29, 30) are welded to an intermediate connection plate (35).

6. A device as claimed in claim 4 or 5, characterised in that said shock absorbers (29, 30) comprise at least one respective identical component.

7. A device as claimed in one of claims 4 to 6, characterised in that said shock absorbers (29, 30) are identical.

8. A device as claimed in any one of the preceding claims, characterised in that said shock absorbers (15, 23; 29, 30) comprise at least one pair of unidirectional valves (11, 21) arranged to allow said fluid to pass through said pistons (12, 18); said valves (11, 21) of said first (15, 29) and said second (23, 30) shock absorber having different settings in order to generate a variable rigidity effect for said device (1, 28).

9. A device as claimed in any one of the preceding claims, characterised by comprising a plurality of hydraulic shock absorbers mechanically connected in series.

Fig. 1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 041 061 (FUNKHOUSER)<br>* Column 1, lines 22-64; figure 1 * | 1-3,8-10 | B 60 G 13/06<br>F 16 F 9/00 |
| X | DE-U-1 954 745 (WACKENHUT)<br>* Whole document * | 1,4-7,9,10 | |
| X | US-A-1 780 659 (WALLACE)<br>* Page 1, line 60 - page 3, line 15; figures 1-5 * | 1-3,8-10 | |
| X | DE-A-3 134 201 (HÖFER)<br>* Page 5, paragraphs 2-4; figure 5 * | 1,2,8-10 | |
| A | US-A-3 363 894 (HILL) | | |
| A | US-A-1 576 152 (STAATS-OELS) | | |
| A | DE-A-2 820 467 (INSTYTUT CHEMII PRZEMYSLOWEJ) | | |
| A | DE-U-1 995 279 (PRASSE) | | TECHNICAL FIELDS SEARCHED (Int. Cl.4) |
| A | PATENT ABSTRACTS OF JAPAN, vol. 5, no. 112 (M-79)[784], 21st July 1981; & JP-A-56 52 639 (MUTOU KOGYO) 11-05-1981<br>* Figure 2 * | | B 60 G<br>F 16 F |

The present search report has been drawn up for all claims

| Place of search | Date of completion of the search | Examiner |
|---|---|---|
| THE HAGUE | 16-12-1987 | ESPEEL R.P. |